(19) Europäisches Patentamt / European Patent Office / Office européen des brevets

(11) **EP 2 473 443 B1**

(12) **FASCICULE DE BREVET EUROPEEN**

(45) Date de publication et mention de la délivrance du brevet:
**21.12.2016 Bulletin 2016/51**

(21) Numéro de dépôt: **10747873.7**

(22) Date de dépôt: **02.09.2010**

(51) Int Cl.:
**C01B 33/193** (2006.01)

(86) Numéro de dépôt international:
**PCT/EP2010/062864**

(87) Numéro de publication internationale:
**WO 2011/026895 (10.03.2011 Gazette 2011/10)**

(54) **NOUVEAU PROCEDE DE PREPARATION DE SILICES PRECIPITEES**

NEUARTIGES VERFAHREN ZUR HERSTELLUNG VON FÄLLUNGSKIESELSÄURE

NOVEL METHOD FOR PREPARING PRECIPITATED SILICA

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.09.2009 FR 0904179**

(43) Date de publication de la demande:
**11.07.2012 Bulletin 2012/28**

(73) Titulaire: **Rhodia Opérations**
**75009 Paris (FR)**

(72) Inventeur: **ALLAIN, Emmanuelle**
**F-94240 L'hay Les Roses (FR)**

(74) Mandataire: **Banfi, Gaia et al**
**Solvay S.A. Italia**
**Viale Lombardia, 20**
**20021 Bollate (MI) (IT)**

(56) Documents cités:
**WO-A1-03/016215        WO-A1-03/016387**
**WO-A1-2008/077948        FR-A1- 2 928 363**

**Description**

La présente invention concerne un nouveau procédé de préparation de silice précipitée.

Il est connu d'employer des silices précipitées comme support de catalyseur, comme absorbant de matières actives, (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), notamment d'élastomère(s).

Le but de la présente invention est de proposer un nouveau procédé de préparation de silice précipitée, qui constitue une alternative aux procédés connus de préparation de silice précipitée, la silice précipitée obtenue présentant de préférence des caractéristiques atypiques.

Ainsi l'objet de l'invention est un nouveau procédé de préparation de silice précipitée comprenant la réaction d'un silicate avec un agent acidifiant ce par quoi l'on obtient une suspension de silice, puis la séparation et le séchage de cette suspension, caractérisé en ce que la réaction du silicate avec l'agent acidifiant est réalisée selon les étapes successives suivantes :

(i) on forme un pied de cuve aqueux présentant un pH compris entre 2 et 5, de préférence entre 2,5 et 5,

(ii) on ajoute audit pied de cuve, simultanément, du silicate et de l'agent acidifiant, de telle manière que le pH du milieu réactionnel soit maintenu entre 2 et 5, de préférence entre 2,5 et 5,

(iii) on arrête l'addition de l'agent acidifiant tout en continuant l'addition de silicate dans le milieu réactionnel jusqu'à l'obtention d'une valeur du pH du milieu réactionnel comprise entre 7 et 10, de préférence entre 7,5 et 9,5,

(iv) on ajoute au milieu réactionnel, simultanément, du silicate et de l'agent acidifiant, de telle manière que le pH du milieu réactionnel soit maintenu entre 7 et 10, de préférence entre 7,5 et 9,5,

(v) on arrête l'addition du silicate tout en continuant l'addition de l'agent acidifiant dans le milieu réactionnel jusqu'à l'obtention d'une valeur du pH du milieu réactionnel comprise entre 2,5 et 5,3, de préférence entre 2,8 et 4,9,

(vi) on met en contact (mélange) le milieu réactionnel obtenu à l'issue de l'étape (v) (présentant donc un pH compris entre 2,5 et 5,3, de préférence entre 2,8 et 4,9) avec de l'agent acidifiant et du silicate, de telle manière que le pH du milieu réactionnel soit maintenu entre 2,5 et 5,3, de préférence entre 2,8 et 4,9,

(vii) on ajoute dans le milieu réactionnel obtenu un agent alcalin, de préférence du silicate, et ce de manière à augmenter le pH du milieu réactionnel jusqu'à une valeur comprise entre 4,7 et 6,3, de préférence entre 5,0 et 5,8, cette étape (vii) pouvant être optionnelle dans le cas où dans l'étape (vi) on met en contact (mélange) un milieu réactionnel (obtenu à l'issue de l'étape (v)), présentant un pH compris entre 5,0 et 5,3, avec de l'agent acidifiant et du silicate, de telle manière que le pH du milieu réactionnel (obtenu par cette mise en contact) soit maintenu entre 5,0 et 5,3.

De manière très préférée, le procédé selon l'invention comporte toujours l'étape (vii).

Dans le procédé selon l'invention, le choix de l'agent acidifiant, de l'agent alcalin et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/L, par exemple entre 60 et 130 g/L.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en $SiO_2$) comprise entre 40 et 330 g/L, par exemple entre 60 et 300 g/L, en particulier entre 60 et 260 g/L.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2,5 et 4, par exemple entre 3,2 et 3,8.

L'agent alcalin employé lors de l'étape (vii) peut être par exemple une solution de soude, de potasse ou d'ammoniac. De préférence, cet agent alcalin est du silicate, en particulier du silicate tel qu'utilisé lors des étapes précédentes.

En ce qui concerne plus particulièrement le procédé de préparation de l'invention, la réaction du silicate avec l'agent acidifiant se fait d'une manière très spécifique selon les étapes suivantes.

On forme tout d'abord (étape (i)) un pied de cuve aqueux présentant un pH compris entre 2 et 5.

De préférence, le pied de cuve formé présente un pH compris entre 2,5 et 5, notamment entre 3 et 4,6 ; ce pH est par exemple compris entre 3,5 et 4,5.

Ce pied de cuve initial peut être obtenu (variante préférée) par ajout d'agent acidifiant à de l'eau de manière à obtenir une valeur de pH du pied de cuve entre 2 et 5, de préférence entre 2,5 et 5, notamment entre 3 et 4,6 et par exemple entre 3,5 et 4,5.

Il peut être également obtenu par ajout d'agent acidifiant à un mélange eau + silicate de manière à obtenir cette valeur de pH.

Il peut aussi être préparé par ajout d'agent acidifiant à un pied de cuve contenant des particules de silice préalablement formées à un pH inférieur à 7, de manière à obtenir une valeur de pH entre 2 et 5, de préférence entre 2,5 et 5, notamment entre 3 et 4,6 et par exemple entre 3,5 et 4,5.

Le pied de cuve formé dans l'étape (i) peut éventuellement comprendre un électrolyte. Néanmoins, de préférence, aucun électrolyte n'est ajouté au cours du procédé de préparation, en particulier dans l'étape (i).

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La deuxième étape (étape (ii)) consiste en une addition simultanée d'agent acidifiant et de silicate, de telle manière (en particulier à des débits tels) que le pH du milieu réactionnel soit compris entre 2 et 5, de préférence entre 2,5 et 5, notamment entre 3 et 5, par exemple entre 3,5 et 4,8.

Cette addition simultanée est avantageusement réalisée de manière telle que la valeur du pH du milieu réactionnel soit proche, de préférence constamment égale (à ± 0,2 près), à celle atteinte à l'issue de l'étape initiale (i).

Puis, dans une étape (iii), on arrête l'addition de l'agent acidifiant tout en continuant l'addition de silicate dans le milieu réactionnel de manière à obtenir une valeur du pH du milieu réactionnel comprise entre 7 et 10, de préférence entre 7,5 et 9,5, par exemple entre 7,5 et 9.

On peut éventuellement effectuer juste après cette étape (iii) et donc juste après l'arrêt de l'addition de silicate, un mûrissement du milieu réactionnel, notamment au pH obtenu à l'issue de l'étape (iii), et en général sous agitation ; ce mûrissement peut par exemple durer de 2 à 45 minutes, en particulier de 5 à 25 minutes et ne comporte préférentiellement ni addition d'agent acidifiant, ni addition de silicate.

Après l'étape (iii) et l'éventuel mûrissement, on procède à une nouvelle addition simultanée d'agent acidifiant et de silicate, de telle manière (en particulier à des débits tels) que le pH du milieu réactionnel soit maintenu entre 7 et 10, de préférence entre 7,5 et 9,5, par exemple entre 7,5 et 9 (étape (iv)).

Cette seconde addition simultanée est avantageusement réalisée de manière telle que la valeur du pH du milieu réactionnel soit constamment égale (à ± 0,2 près) à celle atteinte à l'issue de l'étape précédente.

Il est à noter que l'on peut, entre l'étape (iii) et l'étape (iv), par exemple entre, d'une part, l'éventuel mûrissement suivant l'étape (iii), et, d'autre part, l'étape (iv), ajouter au milieu réactionnel de l'agent acidifiant, le pH du milieu réactionnel à l'issue de cette addition d'agent acidifiant étant cependant compris entre 7 et 9,5, de préférence entre 7,5 et 9,5, par exemple entre 7,5 et 9.

Ensuite, dans une étape (v), on arrête l'addition du silicate tout en continuant l'addition d'agent acidifiant dans le milieu réactionnel de manière à obtenir une valeur du pH du milieu réactionnel comprise entre 2,5 et 5,3, de préférence entre 2,8 et 4,9, par exemple entre 2,9 et 4,5 (voire entre 3,5 et 4,4).

On peut éventuellement effectuer juste après cette étape (v) un mûrissement du milieu réactionnel, notamment au pH obtenu à l'issue de l'étape (v), et en général sous agitation ; ce mûrissement peut par exemple durer de 2 à 45 minutes, en particulier de 5 à 20 minutes et ne comporte préférentiellement ni addition d'agent acidifiant, ni addition de silicate.

Puis on met en contact (étape (vi)) :

- le milieu réactionnel obtenu à l'issue de l'étape (v), ledit milieu réactionnel présentant un pH compris entre 2,5 et 5,3, de préférence entre 2,8 et 4,9, par exemple entre 2,9 et 4,5 (voire entre 3,5 et 4,4),

- avec de l'agent acidifiant et du silicate,

de telle manière (en particulier à des débits tels) que le pH du milieu réactionnel obtenu soit maintenu entre 2,5 et 5,3, de préférence entre 2,8 et 4,9, par exemple entre 2,9 et 4,5 (voire entre 3,5 et 4,4).

Ledit pH du milieu réactionnel peut varier à l'intérieur de la plage 2,5-5,3, de préférence de la plage 2,8-4,9, par exemple de la plage 2,9-4,5 (voire 3,5-4,4), ou, de manière préférée, rester (sensiblement) constant à l'interieur de ces plages.

En général, dans cette étape (vi), la mise en contact du milieu réactionnel issu de l'étape (v) avec l'agent acidifiant et le silicate est effectuée en ajoutant de l'agent acidifiant et du silicate audit milieu réactionnel.

Selon une variante du procédé de l'invention, dans l'étape (vi), on ajoute audit milieu réactionnel d'abord l'agent acidifiant, puis le silicate.

Cependant, selon une variante préférée du procédé de l'invention, dans l'étape (vi), on ajoute plutôt simultanément l'agent acidifiant et le silicate audit milieu réactionnel ; de préférence, cette addition simultanée est effectuée avec régulation du pH du milieu réactionnel obtenu lors de cette addition à une valeur (sensiblement) constante à l'intérieur des plages précitées.

L'étape (vi) est généralement effectuée sous agitation.

Enfin, l'étape (vii) du procédé selon l'invention consiste en une addition, dans le milieu réactionnel obtenu à l'issue de l'étape (vi), d'un agent alcalin, de préférence de silicate, et ce jusqu'à atteindre une valeur du pH du milieu réactionnel comprise entre 4,7 et 6,3, de préférence entre 5,0 et 5,8, par exemple entre 5,0 et 5,4.

Cette septième étape est optionnelle (c'est-à-dire peut ne pas être mise en oeuvre) dans le cas où dans l'étape (vi) on met en contact (mélange) un milieu réactionnel (obtenu à l'issue de l'étape (v)), présentant un pH compris entre 5,0 et 5,3, avec de l'agent acidifiant et du silicate, de telle manière que le pH du milieu réactionnel soit maintenu entre 5,0 et 5,3.

De manière très préférée, le procédé selon l'invention comporte toujours l'étape (vii).

L'étape (vii) est habituellement effectuée sous agitation.

En général, l'ensemble de la réaction (étapes (i) à (vii)) est effectué sous agitation.

Toutes les étapes (i) à (vii) sont habituellement réalisées entre 75 et 97 °C, de préférence entre 80 et 96 °C.

Selon une variante du procédé de l'invention, l'ensemble des étapes est effectué à une température constante.

Selon une autre variante du procédé de l'invention, la température de fin de réaction est plus élevée que la témpérature de début de réaction : ainsi, on maintient la température au début de la réaction (par exemple au cours des étapes (i) et (ii)) de préférence entre 75 et 90 °C, puis on augmente la température, de préférence jusqu'à une valeur comprise entre 90 et 97 °C, valeur à laquelle elle est maintenue (par exemple au cours des étapes (iii) à (vii)) jusqu'à la fin de la réaction.

Il peut être avantageux de procéder à l'issue de l'étape (vii) à un mûrissement du milieu réactionnel obtenu, notamment au pH obtenu à l'issue de cette étape (vii), et en général sous agitation. Ce mûrissement peut par exemple durer de 2 à 30 minutes, en particulier de 3 à 20 minutes et peut être réalisé entre 75 et 97 °C, de préférence entre 80 et 96 °C, en particulier à la température à laquelle a été effectuée l'étape (vii). Il ne comporte préférentiellement ni addition d'agent acidifiant, ni addition de silicate.

Dans le procédé selon l'invention, l'étape (vi) peut être effectuée dans un mélangeur rapide ou dans une zone d'écoulement turbulent, ce qui peut permettre un meilleur contrôle des caractéristiques des silices précipitées obtenues.

Par exemple, dans le cas où, dans l'étape (vi), on ajoute au milieu réactionnel obtenu à l'issue de l'étape (v) d'abord l'agent acidifiant, puis le silicate, alors la mise en contact dudit silicate avec le milieu résultant de l'ajout de l'agent acidifiant au milieu réactionnel obtenu à l'issue de l'étape (v) peut être effectuée dans un mélangeur rapide ou dans une zone d'écoulement turbulent.

De même, dans le cas où, dans l'étape (vi), on ajoute simultanément l'agent acidifiant et le silicate au milieu réactionnel obtenu à l'issue de l'étape (v), alors la mise en contact dudit agent acidifiant et dudit silicate avec ledit milieu réactionnel peut être effectuée dans un mélangeur rapide ou dans une zone d'écoulement turbulent.

De préférence, le milieu réactionnel obtenu dans le mélangeur rapide ou dans une zone d'écoulement turbulent alimente un réacteur, de préférence soumis à une agitation, réacteur dans lequel l'étape (vii) est ensuite mise en oeuvre.

Dans l'étape (vi), on peut utiliser un mélangeur rapide choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevés environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T) ; cet angle peut être différent de 90° (tube en Y), donnant des systèmes à co-courant (par exemple angle de 45°) ou à contre-courant (par exemple angle de 135°) par rapport à l'autre courant.

A titre de mélangeur rapide, on utilise de préférence un mélangeur à jets tangentiels, un mélangeur Hartridge-Roughton ou un mélangeur (ou précipiteur) vortex, qui dérivent des dispositifs en T symétriques.

Plus particulièrement, dans l'étape (vi), on peut mettre en oeuvre un mélangeur rapide à jets tangentiels, Hartridge-Roughton ou vortex, comprenant une chambre ayant (a) au moins deux admissions tangentielles par lesquelles entrent séparément (mais en même temps) soit, d'une part, le silicate, et, d'autre part, le milieu résultant de l'ajout d'agent acidifiant au milieu réactionnel issu de l'étape (v), soit, d'une part, le silicate et l'agent acidifiant, et, d'autre part, le milieu réactionnel issu de l'étape (v), et (b) une sortie axiale par laquelle sort le milieu réactionnel obtenu dans cette étape (vi) et ce, de préférence, vers un(e) réacteur (cuve) disposé(e) en série après ledit mélangeur. Les deux admissions tangentielles sont de préférence situées symétriquement, et de manière opposée, par rapport à l'axe central de ladite chambre.

La chambre du mélangeur à jets tangentiels, Hartridge-Roughton ou vortex éventuellement utilisé présente généralement une section circulaire et est de préférence de forme cylindrique.

Chaque tube d'admission tangentielle peut présenter un diamètre interne d de 0,5 à 80 mm.

Ce diamètre interne d peut être compris entre 0,5 et 10 mm, en particulier entre 1 et 9 mm, par exemple entre 2 et 7 mm. Cependant, notamment à l'échelle industrielle, il est de préférence compris entre 10 et 80 mm, en particulier entre 20 et 60 mm, par exemple entre 30 et 50 mm.

Le diamètre interne de la chambre du mélangeur à jets tangentiels, Hartridge-Roughton ou vortex éventuellement employé peut être compris entre 3d et 6d, en particulier entre 3d et 5d, par exemple égal à 4d ; le diamètre interne du tube de sortie axiale peut être compris entre 1d et 3d, en particulier entre 1,5d et 2,5d, par exemple égal à 2d.

Les débits du silicate et de l'agent acidifiant sont par exemple déterminés de façon à ce qu'au point de confluence les deux courants de réactifs entrent en contact l'un avec l'autre dans une zone d'écoulement suffisamment turbulent.

Dans le procédé selon l'invention, on obtient, à l'issue de l'étape (vii), éventuellement suivie d'un mûrissement, une bouillie de silice qui est ensuite séparée (séparation liquide-solide).

La séparation mise en oeuvre dans le procédé de préparation selon l'invention comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à bille. Le délitage est généralement effectué en présence d'eau et/ou en présence d'un composé de l'aluminium, en particulier d'aluminate de sodium et, éventuellement, en présence d'un agent acidifiant tel que décrit précédemment (dans ce dernier cas, le composé de l'aluminium et l'agent acidifiant sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé selon l'invention offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes.

Le procédé de préparation selon l'invention permet notamment d'obtenir des silices précipitées présentant, de préférence, une morphologie, une granulométrie et une porosité particulières.

Dans l'exposé qui suit, la surface spécifique CTAB est la surface externe, qui peut être déterminée selon la méthode décrite ci-dessous dérivée de la norme NF ISO 5794-1 (février 2006, 2ème tirage 2006-03).

*Principe*

La silice est mise en contact avec une solution de bromure de cétyltriméthyl ammonium (ou hexadécyltriméthylammonium), appelé communément CTAB, sous agitation magnétique. La couche de CTAB adsorbé est proportionnelle à la surface spécifique de la silice.

La silice et la solution de CTAB résiduel sont séparées. Le titrage de l'excès de CTAB est effectué par une solution de di(2-éthylhexyl)sulfosuccinate de sodium, appelé communément OT, jusqu'à un point de turbidité maximale.

La surface externe d'une silice peut se déterminer par la quantité de CTAB qu'elle est capable d'adsorber, exprimée en $m^2/g$, sur produit séché pendant 2 heures à 105 °C.

*Matériel et équipement*

*- Matériel*

Filtres pour seringues 0,45 $\mu$m
Flacons
Fiole jaugée de 5000 mL.
Barreaux aimantés
Seringues de 10 mL

*- Equipement*

Balance avec une précision à 0,1 mg près
Agitateurs magnétiques

Titrateur automatique équipé i) d'un détecteur photoélectrique ou d'un photomètre mesurant le facteur de transmission de la lumière à la longueur d'onde de 550 nm, et ii) d'une burette, par exemple un titrateur Mettler DL 21 avec phototrode 550 nm

*Mode opératoire*

Durant toute la durée d'analyse, tous les appareils et toutes les solutions doivent être à une température comprise entre 23 et 27 °C, afin d'éviter un début de cristallisation, le CTAB cristallisant à 20 °C.

*- Réactifs*

. Solution de CTAB de concentration (Co) de 11 g/L, tamponnée à pH 9,6 :

Dans une fiole jaugée de 5 litres, contenant environ 1 litre d'eau permutée, on pèse/introduit :

- 5,426 g d'acide borique,
- 6,489 g de chlorure de potassium et

- 64,5 cm$^3$ de soude 1 mol/L à la burette.

Puis on homogénéise le mélange.

On rajoute 55 g $\pm$ 0,001 g de CTAB et environ 3 litres d'eau permutée.

On homogénéise jusqu'à complète dissolution du CTAB et on ajuste à 5 litres avec de l'eau permutée.

. Solution d'aérosol OT (di(2-éthylhexyl)sulfosuccinate de sodium) :

On pèse environ 1,85 g $\pm$ 0,01 g d'aérosol et on les dissout dans une fiole jaugée d'un litre avec de l'eau permutée (on chauffe légèrement pour accélérer la dissolution sous agitation magnétique).

La solution obtenue est laissée au repos pendant 12 jours avant utilisation.

- *Méthode d'analyse*

. Préparation de la suspension

On pèse dans un flacon TP 50/100 environ exactement :

1,60 g $\pm$ 0,05 g de silice pour une surface spécifique attendue inférieure à 130 m$^2$/g,

0,90 g $\pm$ 0,05 g de silice pour une surface spécifique attendue comprise entre 130 et 180 m$^2$/g,

0,66 g $\pm$ 0,05 g de silice pour une surface spécifique attendue supérieure à 180 m$^2$/g.

On ajoute ensuite à cette masse M de silice 90 mL (Vo) de solution de CTAB.

. Adsorption

On introduit un barreau aimanté, de longueur égale à 35 mm (par exemple barreau aimanté dit "double extrémité"), dans le flacon qui est alors mis en agitation à l'aide d'agitateurs magnétiques (temps de séjour de 40 minutes, vitesse d'agitation de 600 trs/min).

. Filtration

A l'aide d'une seringue, on prélève de la suspension. Puis, après avoir équipé la seringue d'un filtre 0,45 $\mu$m, on filtre la suspension et on récupère environ 10 mL de solution filtrée dans un flacon.

. Mesures

On prépare le titrateur automatique conformémemnt aux instructions du fabricant. On choisit les paramètres de titrage de manière à obtenir une introduction rapide de solution d'aérosol OT au début du titrage et vun ralentissement en fonction de la pente de la courbe de titrage au voisinage du point final.

- Titrage à blanc

Un premier titrage ou titrage à blanc (titrage 1) est préalablement effectué quotidiennement, avant le titrage de l'échantillon, sur la solution de CTAB de départ, c'est-à-dire avant mélange avec la silice.

On pèse environ exactement 5 g de solution de CTAB de départ, puis on les introduit dans un flacon.

On y ajoute 54 mL d'eau permutée.

On procède au titrage (titrage 1).

Pour cela, on place le flacon dans le titrateur automatique et on règle la vitesse de l'agitateur de manière à pouvoir effectuer le mélange sans produire de mousse.

Puis on commence le titrage qui prend fin automatiquement une fois que le point de turbidité maximale est atteint.

Chaque titrage est effectué en double.

V1 est le volume (en mL) de solution d'aérosol OT obtenu pour le titrage de la masse M1 (en g) de la solution de CTAB de départ utilisée pour ce titrage.

- Titrage de l'échantillon

On pèse environ exactement 5 g de solution récupérée après la filtration, puis on les introduit dans un flacon.

On y ajoute 54 mL d'eau permutée.

On procède au titrage (titrage 2).

Pour cela, on place le flacon dans le titrateur automatique et on règle la vitesse de l'agitateur de manière à pouvoir effectuer le mélange sans produire de mousse.

Puis on commence le titrage qui prend fin automatiquement une fois que le point de turbidité maximale est atteint.

Chaque titrage est effectué en double.

V2 est le volume (en mL) de solution d'aérosol OT obtenu pour le titrage de la masse M2 (en g) de la solution de CTAB récupérée après la filtration et utilisée pour ce titrage.

- Calcul

La surface CTAB (en m$^2$/g) est égale à :

578,4 x (Vo/M) x (100/(100 - Hum)) x (Co/1000) x [((V1/M1) - (V2/M2))/(V1/M1)] avec :

Vo : volume (en mL) de solution de CTAB de départ (90 mL) ajoutée à la silice pour préparer la suspension en vue du titrage,

M : masse (en g) de silice à laquelle est ajoutée la solution de CTAB de départ pour préparer la suspension en vue du titrage,

Hum : humidité (ou teneur en eau résiduelle) de la silice mesurée après traitement thermique à 105 °C pendant 2 heures (en nombre de %)

Co : concentration initiale (en g/L) de la solution de CTAB (11 g/L)

M1 : masse (en g) de la solution de CTAB de départ utilisée pour le titrage 1, c'est-à-dire avant mélange avec la silice

V1 : volume (en mL) de solution d'aérosol OT obtenu pour le titrage de M1 (titrage 1)

M2 : masse (en g) de la solution de CTAB utilisée pour le titrage 2, c'est-à-dire après mélange avec la silice et adsorption sur la silice

V2 : volume (en mL) de solution d'aérosol OT obtenu pour le titrage de M2 (titrage 2)

578,4 correspond à la surface (en m$^2$) occupée par 1 gramme de CTAB.

La surface spécifique BET est déterminée selon une méthode découlant de la méthode de BRUNAUER - EMMET - TELLER décrite dans "The journal of the American Chemical Society", Vol. 60, page 309, février 1938 et correspondant à la norme NF ISO 9277 (décembre 1996).

Le pH est mesuré selon la méthode suivante dérivant de la norme ISO 787/9 (pH d'une suspension à 5 % dans l'eau) :

*Appareillage :*

- pHmètre étalonné (précision de lecture au 1/100$^e$)
- életrode de verre combinée
- bécher de 200 mL
- éprouvette de 100 mL
- balance de précision à 0,01 g près.

*Mode opératoire :*

5 g de silice sont pesés à 0,01 g près dans le bécher de 200 mL. 95 mL d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectué.

La méthode d'analyse granulométrique XDC par sédimentation centrifuge, à l'aide de laquelle est mesurée la taille médiane d50 d'agrégats, est décrite ci-après :

*Matériel nécessaire*

- granulomètre à sédimentation centrifuge BI-XDC (BROOKHAVEN-INSTRUMENT X DISC CENTRIFUGE) commercialisé par la société Brookhaven Instrument Corporation)
- bécher forme haute de 50 ml
- éprouvette graduée de 50 ml
- sonde à ultra-sons BRANSON 1500 watts, sans embout, de diamètre de 13 mm,
- eau permutée
- cristallisoir rempli de glace
- agitateur magnétique

*Conditions de mesure*

- version Windows 3.54 du logiciel (fournie par le fabricant du granulomètre)
- mode fixe
- vitesse de rotation : 5000 tr/min
- durée de l'analyse : 120 minutes
- densité (silice) : 2,1
- volume de la suspension à prélever : 15 ml

*Préparation de l'échantillon*

Ajouter dans le bécher forme haute 3,2 g de silice et 40 ml d'eau permutée.
Mettre le bécher contenant la suspension dans le cristallisoir rempli de glace.
Plonger la sonde à ultra-sons dans le bécher.
Désagglomérer la suspension pendant 8 minutes à l'aide de la sonde BRANSON de 1500 watts (utilisée à 60 % de la puissance maximale).
Lorsque la désagglomération est terminée, mettre le bécher sur un agitateur magnétique.
Refroidir la dispersion obtenue à la température ambiante (21 °C)

*Préparation du granulomètre*

Allumer l'appareil et laisser chauffer pendant au moins 30 minutes.
Rincer 2 fois le disque à l'eau permutée.
Introduire dans le disque 15 ml de l'échantillon à analyser et mettre en agitation.
Entrer dans le logiciel les conditions de mesure mentionnées ci-dessus. Faire les mesures.
Lorsque les mesures ont été effectuées :

Arrêter la rotation du disque.
Rincer plusieurs fois le disque à l'eau permutée.
Arrêter l'appareil.

*Résultats*

Dans le registre d'appareil, relever les valeurs du diamètre passant à 50 % (% massique) ou taille médiane (taille pour laquelle on a 50 % en masse des agrégats de taille inférieure à cette taille) et éventuellement la valeur du Mode (la dérivée de la courbe granulométrique cumulée donne une courbe de fréquence dont l'abscisse du maximum (abscisse de la population principale) est appelé le Mode).
Les volumes poreux et diamètres/rayons de pores donnés sont mesurés par porosimétrie au mercure (Hg), à l'aide d'un porosimètre MICROMERITICS Autopore IV 9520, et sont calculés par la relation de WASHBURN avec un angle de contact théta égal à 140° et une tension superficielle gamma égale à 485 Dynes/cm ; la préparation de chaque échantillon se fait comme suit : chaque échantillon est préalablement séché pendant 2 heures en étuve à 200 °C.
$V_{(d5 - d50)}$ représente le volume poreux constitué par les pores de diamètres compris entre d5 et d50, et $V_{(d5 - d100)}$ représente le volume poreux constitué par les pores de diamètres compris entre d5 et d100, dn étant ici le diamètre de pores pour lequel n % de la surface totale de tous les pores est apporté par les pores de diamètre supérieur à ce diamètre (la surface totale des pores (S0) peut être déterminée à partir de la courbe d'intrusion de mercure).
La dérivée de la courbe cumulée (volume poreux cumulé (ml/g) en fonction du rayon de pores (nm), figure 1) donne une courbe de fréquence dont l'abscisse du maximum (abscisse de la population principale) pour des pores de rayons inférieurs à 100 nm est appelée le Mode (en nm).

La morphologie de la silice, la présence de particules primaires de tailles différentes et la taille (le diamètre) desdites particules primaires sont illustrées/mesurées par Microscopie Electronique à Transmission (MET) comme suit.

1) Principe de la méthode:

La microscopie électronique à transmission (MET) est utilisée dans son mode imagerie, à des grandissements allant jusqu'à 400000, qui sont appropriés pour caractériser les particules primaires de silice.

L'objectif de la caractérisation par MET des silices est de donner accès à des répartitions granulométriques, pondérées par le nombre, des particules primaires de silice.

Les clichés obtenus par la technique MET ne permettant pas nécessairement de dissocier les différentes particules primaires par analyse d'image, c'est au microscopiste de les identifier ; le critère utilisé pour cela est la proportion de la circonférence qui est reconnaissable. Il peut se produire que dans certaines régions des agrégats, il soit impossible d'identifier des particules primaires (par exemple en cas de surépaisseurs locales de matière, ou bien si les particules sont trop interpénétrées pour que la notion de particule primaire ait un sens). Cela n'est cependant pas un obstacle à l'identification d'un nombre de particules primaires suffisamment grand pour obtenir des valeurs significatives.

Le principe de la méthode est donc d'identifier un nombre suffisamment élevé de particules primaires et d'analyser leurs dimensions.

Les particules primaires de la silice obtenues par le procédé selon l'invention sont assimilables à des sphères ; l'analyse des dimensions se fait à partir du cliché MET ; elle consiste, pour chaque particule primaire identifiée, à superposer un cercle qui reproduit correctement la circonférence de la particule, et à mesurer son diamètre. Cette opération est répétée sur un nombre suffisamment élevé de particules primaires, afin d'établir une répartition granulométrique de ces particules primaires, pondérée par le nombre. Cette répartition est une répartition différentielle. On en déduit une répartition granulométrique cumulée des particules primaires. Le descripteur choisi pour exploiter ces dimensions est déduit de la répartition granulométrique cumulée. Il s'agit du diamètre médian en nombre d50%. C'est le diamètre tel que 50 % des particules primaires comptées ont un diamètre inférieur à cette valeur, et 50 % des particules primaires comptées ont un diamètre supérieur à cette valeur.

Comme décrit ci-après, la silice obtenue selon l'invention est généralement formée de deux familles de particules primaires de silice, dont les diamètres sont différents et qui sont facilement discernables sur les clichés obtenus par la technique MET. Pour une silice donnée, les opérations d'identification et de comptage des particules primaires sont donc conduites à deux reprises, une première fois pour les petites particules primaires et une deuxième fois pour les grosses particules primaires ; ces deux opérations sont conduites séparément, et les résultats obtenus sont représentés par deux répartitions granulométriques pondérées par le nombre, qui ne sont liées en aucune façon. Compte tenu des différences importantes de diamètre entre les petites particules primaires et les grosses particules primaires, il est nécessaire de procéder à deux acquisitions de clichés séparées, à deux grandissements différents ; des valeurs de grandissement usuelles sont 150000 à 250000 pour l'analyse granulométrique des grosses particules primaires, et 400000 pour l'analyse granulométrique des petites particules primaires. Ces valeurs peuvent varier en fonction des dimensions des particules.

2) Mode opératoire:

Le matériel nécessaire est le suivant :

a) Microscope électronique à transmission donnant accès à des grandissements allant au moins jusqu'à 400000. La tension d'accélération sera choisie de préférence égale à 120 kV.
b) Grilles pour observation MET. Une possibilité est de préparer des grilles 200 mesh en cuivre selon le mode opératoire suivant :

préparation d'une solution de Collodion (nitrocellulose) à 0,2 % en polymère dans l'acétate d'isoamyle,
remplissage d'un cristallisoir par de l'eau permutée, et disposition des grilles MET à l'intérieur,
dépôt de quelques gouttes de la solution de collodion à la surface de l'eau,
évaporation du solvant de façon à élaborer un film de collodion à la surface de l'eau,
soutirage de façon à déposer le film de collodion à la surface des grilles,
dépôt sous vide d'un grain de carbone de taille comprise entre 2 et 3 nm au moyen d'un métalliseur carbone,
hydrophilisation de la surface de collodion carbonée, par un plasma d'air généré sous haute tension et sous vide contrôlé, au moyen d'un hydrophilisateur.

Après cette opération, la surface ne reste hydrophile que pendant 30 minutes environ ; il est donc préférable de ne réaliser cette opération qu'au dernier moment, une fois la suspension de silice prête.

Au préalable, le microscope électronique à transmission doit être correctement aligné suivant la procédure fournie par son constructeur. En outre il doit faire l'objet d'une vérification de bon fonctionnement portant sur son grandissement. On utilise à cet effet un étalon ou un matériau de référence certifié, tel que les grandissements 150000 et 400000 soient inclus dans l'intervalle des valeurs de grandissement retenu pour la vérification. L'écart constaté entre les valeurs de distances mesurées et les valeurs de distances fournies sur le certificat de l'étalon ou du matériau de référence doit être au maximum égal à 10 %.

Le mode opératoire se décompose comme suit :

i) Préparation d'une suspension de silice désagglomérée aux ultra-sons selon le protocole donné pour la préparation de l'échantillon dans la méthode d'analyse granulométrique XDC par sédimentation centrifuge décrite plus haut.

ii) Dilution d'un facteur 50 de cette suspension dans l'eau permutée.

iii) Dépôt de quelques microlitres de cette suspension sur une grille MET hydrophilisée (moins de 5 $\mu$L).

iv) Une fois la grille sèche, la placer sur le porte-objet.

v) Introduire le porte-objet dans le microscope et procéder aux réglages usuels (en particulier eucentricité et astigmatisme objectif).

vi) La silice étant très sensible au rayonnement électronique, l'acquisition des clichés doit se faire sur des champs n'ayant jamais été exposés aux électrons, et dans des conditions telles que l'exposition du champ observé aux électrons soit la plus courte possible, temps de pose inclus (< 5 secondes). Si nécessaire on utilise un mode d'exposition "Low-Dose" ou un équivalent. On doit attacher une grande importance à l'observation de détail du champ observé, afin d'être certain que les dégâts d'irradiation soient négligeables. Si malgré toutes ces précautions, des dégâts irréversibles apparaissent sur l'échantillon, il sera nécessaire d'envisager l'observation à froid au moyen d'un porte-objet refroidi à la température de l'azote liquide.

vii) On réalise au moins une dizaine de clichés au grandissement 150000 et une dizaine de clichés au grandissement 400000, l'objectif étant d'être assuré de compter au moins 200 petites particules primaires et 200 grosses particules primaires. L'aire de grille utilisée effectivement pour l'identification et le comptage des particules doit être au minimum de 0,5 $\mu$m$^2$ pour les petites particules primaires et de 3,0 $\mu$m$^2$ pour les grosses particules primaires.

viii) On considère par la suite que les petites particules primaires sont les particules inscrites dans un cercle de diamètre inférieur strictement à 10 nm, et que les grosses particules primaires sont les particules inscrites dans un cercle de diamètre supérieur ou égal à 10 nm.

ix) Comme énoncé ci-dessus, on procède séparément à la détermination de la répartition granulométrique des petites particules primaires, et à la détermination de la répartition granulométrique des grosses particules primaires, ces deux répartitions étant pondérées par le nombre. Les objets identifiés comme étant des particules primaires sont assimilés à des sphères, et le cercle qui est considéré pour caractériser chaque particule est le cercle dans lequel la particule en question est inscrite. Cette opération peut se faire à l'aide d'un logiciel tel que par exemple ImageJ, Adobe Photoshop ou Analysis.

20 classes granulométriques sont définies entre 0 et 10 nm pour les petites particules primaires, de façon linéaire (c'est-à-dire classes de largeur 0,5 nm) ; 20 classes granulométriques sont définies au dessus de 10 nm pour les grosses particules primaires, de façon linéaire, et de manière à représenter toutes les grosses particules primaires identifiées.

L'identification des particules primaires est basée sur la portion de leur périphérie qui est reconnaissable. Dans le cas des grosses particules primaires, on considère que le tiers environ de la circonférence doit au minimum être reconnaissable pour valider l'identification. C'est le cas pour les particules situées en périphérie de l'agrégat, ou bien pour les particules présentant une différence de contraste suffisante avec le reste de l'agrégat.

Dans le cas des petites particules primaires, on considère que la moitié environ de la circonférence doit au minimum être reconnaissable pour valider l'identification. Cela s'observe en périphérie des agrégats, sur les petites particules visibles à la surface des grosses particules primaires, ou bien dans des zones de l'agrégat de faible épaisseur, pour des petites particules présentant une différence de contraste suffisante avec le reste de l'agrégat.

x) Pour chaque type de particule primaire, grosse ou petite, la répartition granulométrique différentielle en nombre est déterminée, et à partir de cette répartition différentielle, la répartition granulométrique cumulée est déterminée. Cette dernière opération peut se faire à l'aide d'un logiciel tel que par exemple Microsoft Excel. A partir de chaque répartition granulométrique cumulée, on détermine le diamètre médian en nombre D50%, exprimé en nanomètres.

xi) Une fois ces deux répartitions granulométriques déterminées, il est nécessaire de vérifier que cette démarche de caractérisation par MET est bien adaptée à la silice étudiée, en considérant pour chacune des deux familles de particules l'enveloppe de la répartition granulométrique différentielle. Cette enveloppe doit présenter un maximum dans la région 0 à 10 nm pour la famille des petites particules primaires, et elle doit présenter un maximum au-dessus de 10 nm pour la famille des grosses particules primaires. Ceci valide l'existence de deux familles de particules distinctes par leurs dimensions.

La morphologie de la silice et la présence de particules primaires de tailles différentes peuvent être également illustrées par diffusion de rayons X aux petits angles (en anglais SAXS *(Small Angle X ray Scattering)*) comme suit.

1) *Principe de la méthode :*

La diffusion de rayons X aux petits angles (SAXS) consiste à exploiter la déviation d'un faisceau de rayons X incident, de longueur d'onde λ, traversant l'échantillon, dans un cône de quelques degrés d'angle. A un angle de diffusion θ correspond un vecteur d'onde défini par la relation suivante :

$$q = \frac{4\pi}{\lambda} \sin \frac{\theta}{2}$$

dont l'unité est l' $\mathring{A}^{-1}$.

A chaque angle de diffusion correspond un vecteur d'onde q défini dans l'espace réciproque. Ce vecteur d'onde correspond à une échelle spatiale définie dans l'espace réel, et qui équivaut à $2\pi/q$. La diffusion aux petits angles caractérise donc les grandes distances dans l'échantillon, et inversement la diffusion aux grands angles caractérise les petites distances dans l'échantillon. La technique est sensible à la façon dont la matière est distribuée dans l'espace.

Des références de base sur cette technique sont données ci-dessous :

[1] Small Angle Scattering of X rays, Guinier A., Fournet G., (1955), Wiley, New York.
[2] Small Angle X Ray Scattering , Glatter O., Krattky O., (1982), Academic Press, New York.
[3] Analysis of the Small-Angle Intensity Scattered by a Porous and Granular Medium, Spalla O., Lyonnard S., Testard F., J. Appl. Cryst. (2003), 36, 338-347.

La configuration requise pour caractériser des silices par SAXS selon le critère défini ci-après est la suivante :

- montage SAXS travaillant dans une géométrie de transmission (c'est-à-dire le faisceau incident traversant l'échantillon), avec une longueur d'onde incidente comprise entre 0,5 et 2 Angströms (A),
- intervalle de vecteur d'onde q compris entre 0,015 $\mathring{A}^{-1}$ et 0,30 $\mathring{A}^{-1}$, ce qui permet de caractériser des distances dans l'espace réel allant de 420 à 20 Å,
- montage vérifié en échelle de q à l'aide d'un étalon convenable (par exemple béhénate d'argent, octadécanol ou tout autre composé donnant une raie SAXS fine comprise dans l'intervalle de q ci-dessus),
- détecteur linéaire unidimensionnel ou de préférence bidimensionnel,
- le montage doit permettre de mesurer la transmission de la préparation, c'est-à-dire le rapport entre l'intensité transmise par l'échantillon et l'intensité incidente.

Un tel montage peut être par exemple un montage de laboratoire, fonctionnant sur une source de type tube à rayons X ou bien anode tournante, utilisant de préférence l'émission $k_\alpha$ du cuivre à 1,54 Å. Le détecteur peut être une plaque image ou de préférence un détecteur à gaz. Il peut aussi s'agir d'un montage SAXS sur synchrotron.

2) *Mode opératoire :*

L'échantillon de silice est analysé sous forme solide pulvérulente. La poudre est placée entre deux fenêtres transparentes aux rayons X. Indépendamment de cette préparation, on réalise une cellule vide avec uniquement deux fenêtres transparentes, sans silice à l'intérieur. La diffusion par la cellule vide doit être enregistrée séparément de la diffusion par la silice. Lors de cette opération, dite "mesure du background", l'intensité diffusée provient de toutes les contributions extérieures à la silice, telles que le bruit de fond électronique, la diffusion par les fenêtres transparentes, la divergence résiduelle du faisceau incident.

Ces fenêtres transparentes doivent apporter un bruit de fond faible devant l'intensité diffusée par la silice sur l'intervalle de vecteur d'onde exploré. Elles peuvent être constituées de mica, de film de Kapton, ou préférentiellement de film de Kapton adhésif.

Préalablement à l'acquisition SAXS proprement dite sur la silice, il convient de vérifier la qualité de la préparation au moyen de la mesure de transmission de la cellule chargée de silice.

Les étapes à franchir sont donc les suivantes:

2.1) Elaboration d'une cellule constituée de deux fenêtres sans silice (cellule vide).

2.2) Elaboration d'une cellule constituée de deux fenêtres, avec un échantillon de poudre de silice à l'intérieur. La quantité de silice introduite doit être inférieure à 50 mg. La silice doit former une couche d'épaisseur inférieure à 100 $\mu$m. On chercher de préférence à obtenir une monocouche de grains de silice disposée sur une fenêtre, ce qui est plus facile à obtenir avec des fenêtres adhésives. La qualité de la préparation est contrôlée par la mesure de la transmission (étape 2.3)).

2.3) Mesure de la transmission de la cellule vide et de la cellule de silice. On définit le rapport R de la façon suivante :

R = transmission de la cellule de silice / transmission de la cellule vide

R doit être compris entre 0,6 et 0,9, afin de minimiser les risques de diffusion multiple, tout en conservant un rapport signal sur bruit satisfaisant à grand q. Si la valeur de R est trop faible, il convient de diminuer la quantité de silice visible par le faisceau ; si elle est trop élevé, il faut rajouter de la silice.

2.4) Acquisition SAXS sur la cellule vide et sur la cellule de silice. Les temps d'acquisition doivent être déterminés de telle façon que le rapport signal/bruit à grand q soit acceptable. Ils doivent être tels qu'au voisinage immédiat de q = 0,12Å$^{-1}$, les fluctuations de la fonction F(q) définie ci-après ne doivent pas dépasser +/- 5 % par rapport à la valeur que prend la fonction F en ce point.

2.5) Si l'on a utilisé un détecteur bidimensionnel : regroupement radial de chacun des deux spectres bidimensionnels pour obtenir l'intensité diffusée en fonction du vecteur d'onde q. La détermination de l'intensité diffusée doit tenir compte du temps d'exposition, de l'intensité du faisceau incident, de la transmission de l'échantillon, de l'angle solide intercepté par le pixel du détecteur. La détermination du vecteur d'onde doit tenir compte de la longueur d'onde du faisceau incident et de la distance échantillon-détecteur.

2.6) Si l'on a utilisé un détecteur monodimensionnel : les déterminations précédentes concernant l'intensité diffusée et le vecteur d'onde sont à effectuer, mais il n'y a pas de regroupement radial à prévoir.

2.7) On arrive ainsi à deux spectres réduisant l'information à la variation de l'intensité diffusée en fonction du vecteur d'onde q : un spectre pour la cellule vide et un spectre pour la cellule de silice.

2.8) Soustraction de l'intensité diffusée par la cellule vide de l'intensité diffusée par la cellule de silice (soustraction de "background").

2.9) Le spectre SAXS de la silice, après soustraction de "background", présente une décroissance monotone qui se fait selon un régime voisin du régime de Porod, c'est-à-dire que l'intensité décroît très rapidement avec le vecteur d'onde selon une loi proche d'une loi de puissance en q$^{-4}$. Les petites déviations par rapport à cette loi de Porod sont mieux visibles en représentant les données selon la méthode dite de Krattky-Porod. Il s'agit de représenter F(q) en fonction de q, avec :

$$F(q) = I \times q4$$

où I représente l'intensité diffusée après soustraction du "background" et q représente le vecteur d'onde.

2.10) Dans la représentation de Krattky-Porod, lorsque l'on décrit le spectre dans le sens des vecteurs d'onde croissants, la présence de deux populations de tailles de particules se traduit par une première croissance de la fonction F(q), qui caractérise les plus grosses particules, puis d'une deuxième croissance de la fonction F(q), qui caractérise les plus petites particules. On peut éventuellement observer une oscillation de l'intensité au niveau de la première croissance, qui peut s'observer si la répartition de taille des plus grosses particules est relativement resserrée.

2.11) Le critère SAXS défini dans le cadre du présent exposé s'appuie sur la croissance de la fonction F entre deux bornes de vecteur d'onde définies, qui sont q1 = 0,03 Å$^{-1}$ et q2 = 0,12 Å$^{-1}$.

On définit un rapport (paramètre) C de la façon suivante :

$$C = [F(q2) - F(q1)] / F(q2)$$

L'aptitude à la dispersion (et à la désagglomération) des silices obtenues par le procédé selon l'invention peut être quantifiée au moyen de tests spécifiques de désagglomération.
L'un des tests de désagglomération est décrit ci-dessous :

1) Principe :

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns).

2) Matériel :

- MALVERN MASTERSIZER 2000, équipé du module standard hydroG.
- Balance de précision donnant 0,1 mg (par exemple METTLER AE260).
- Eau permutée.
- Sonificateur BIOBLOCK (VIBRACELL 75043) de 750 watts (équipé d'un embout de 13 mm de diamètre), utilisé à 80 % de sa puissance nominale.
- Bécher de 50 mL (forme haute).
- Eprouvette graduée de 50 mL.
- Cristallisoir + glace.

3) Conditions de mesure :

Les conditions complètes d'analyse sont gérées manuellement en réglant :

- les paramètres de l'échantillonneur

    débit de pompe : 1600 tr/min
    vitesse agitateur : 600 tr/min

- les paramètres de mesure :

    durée de mesure échantillon : 10 secondes
    durée de mesure bruit de fond : 10 secondes
    nombre de mesures : 3

- les propriétés optiques :

    modèle optique : théorie de Fraunhofer
    analyse standard, sensibilité normale

4) Opérations à effectuer :

i) Préparation de l'échantillon

- Dans le bécher posé sur le plateau de la balance, peser environ 2 g de l'échantillon à analyser,
- Ajouter 50 mL d'eau permutée à l'aide de l'éprouvette graduée,
- Mettre le bécher contenant la suspension de silice dans le cristallisoir contenant de la glace,
- Plonger la sonde à ultra-sons dans cette suspension en ne laissant que 1 cm entre l'extrémité de la sonde et le fond du bécher,
- Désagglomérer pendant 5 minutes et 30 secondes.

ii) Préparation du granulomètre

Dans le logiciel, procéder de la manière suivante :

- activer un fichier dans lequel seront enregistrées les mesures (lecteur A par exemple)
- ouvrir « mesurer » - « manuel »
- ouvrir « option » - nom de la particule : Fraunhofer - dispersant : eau (voir paragrahe 3 propriétés optiques)
- ouvrir « préparateur » - lancer un cycle de nettoyage
- lorsque le nettoyage est terminé, ajuster les paramètres de l'agitateur et du débit de pompe comme indiqué dans le paragraphe 3
- activer démarrer.

Lorsque les mesures de bruit de fond et alignement sont terminées, introduire une partie aliquote de la suspension de silice désagglomérée dans la cuve de façon à obtenir une obscuration correcte et poursuivre le cycle d'analyse.
Lorsque l'analyse est terminée, lancer un cycle de nettoyage.
Lorsque le nettoyage est terminé, mettre à zéro le débit de pompe et la vitesse d'agitation.
La valeur du diamètre médian $D_{50M}$ (ou diamètre médian Malvern) que l'on obtient est d'autant plus faible que la silice présente une aptitude à la désagglomération élevée.
Le nombre de silanols par $nm^2$ de surface est déterminé par greffage de méthanol sur la surface de la silice. Dans un premier temps, 1 gramme de silice brute est mis en suspension dans 10 mL de méthanol, dans un autoclave de 110 mL (Top Industrie, référence 09990009). Un barreau aimanté est introduit et l'autoclave, fermé hermétiquement et calorifugé, est chauffé à 200 °C (40 bars) sur agitateur magnétique chauffant pendant 4 heures. L'autoclave est ensuite refroidi dans un bain d'eau froide. La silice greffée est récupérée par décantation et le méthanol résiduel est évaporé sous courant d'azote. Enfin, la silice greffée est séchée à 130 °C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée est effectué dans les trois jours qui suivent la fin du séchage, l'humidité de l'air ou la chaleur pouvant en effet provoquer une hydrolyse du greffage méthanol. Le nombre de silanols par $nm^2$ est calculé par la formule suivante :

$$N_{SiOH/nm2} = [(\%C_g - \%C_b) \times 6,023 \times 10^{23}] / [S_{BET} \times 10^{18} \times 12 \times 100]$$

avec $\%C_g$ : pourcentage massique de carbone présent sur la silice greffée
$\%C_b$ : pourcentage massique de carbone présent sur la silice brute
$S_{SET}$ : surface spécifique BET de la silice ($m^2$/g)

La mise en oeuvre du procédé de préparation selon l'invention permet d'obtenir une silice précipitée possédant une morphologie particulière : elle est en effet de préférence formée d'agrégats de particules primaires (A) de silice à la surface desquels se trouvent (sont greffées) des particules primaires (B) de silice de taille inférieure à celle des particules primaires (A).
Elle présente de préférence :

- une surface spécifique CTAB ($S_{CTAB}$) comprise entre 60 et 400 $m^2$/g,
- une taille médiane d50 d'agrégats (particules primaires (A) ou grosses particules primaires + particules primaires (B) ou petites particules primaires), mesurée par granulométrie XDC après désagglomération aux ultra-sons, telle que : d50 (nm) > (6214 $S_{CTAB}$ (m²/g)) + 23,

- une répartition du volume poreux telle que :

$$V_{(d5 - d50)} / V_{(d5 - d100)} > 0,906 - (0,0013 \times S_{CTAB} \text{ (m}^2\text{/g))},$$

et

- une distribution de tailles (diamètres) de pores telle que :

$$\text{Mode (nm)} > (4166 / S_{CTAB} \text{ (m}^2\text{/g))} - 9,2.$$

Cette silice précipitée peut présenter un paramètre C, mesuré par diffusion de rayons X aux petits angles (SAXS), tel que : C $S_{CTAB}$ (m²/g) > 0,001.

Ceci illustre une morphologie particulière, par exemple la présence de deux populations de particules primaires de tailles différentes.

Elle est avantageusement formée d'agrégats de grosses particules primaires de silice sur lesquels se trouvent (sont greffées) des petites particules primaires (ppp) de silice, le diamètre médian en nombre des grosses particules primaires (gpp) étant supérieure à 8 nm, par exemple compris entre 8,5 et 12 nm, notamment entre 9 et 12 nm, ou étant d'au moins 12 nm, en particulier d'au moins 13 nm, par exemple d'au moins 14 nm, voire d'au moins 17 nm, et le diamètre médian en nombre des petites particules primaires (ppp) étant compris entre 2 et 8 nm, en particulier entre 3 et 6 nm, par exemple entre 3 et 5 nm (diamètres déterminés par MET).

En général, la silice précipitée obtenue par le procédé selon l'invention contient (détermination par MET par exemple) 30 à 95 %, de préférence 55 à 90 %, en particulier 60 à 85 %, en nombre de particules primaires (B) (ou petites particules primaires), et, 5 à 70 %, de préférence 10 à 45 %, en particulier 15 à 40 %, en nombre de particules primaires (A) (ou grosses particules primaires).

De manière préférée, dans la silice précipitée obtenue par le procédé selon l'invention, il y a très peu, voire pas, de petites particules primaires isolées ("hors-grain"), agrégées entre elles ou non, c'est-à-dire non reliées à des agrégats de grosses particules primaires. La proportion de telles petites particules primaires isolées est en général inférieure à 10 % en nombre, en particulier inférieure à 5 % en nombre, par exemple sensiblement nulle.

En général, les petites particules primaires sont solidement accrochées aux agrégats de grosses particules primaires.

De manière préférée, la répartition du volume poreux de la silice précipitée obtenue par le procédé selon l'invention est en outre telle que :

$$V_{(d5 - d50)} / V_{(d5 - d100)} > 0,71, \text{ en particulier } V_{(d5 - d50)} / V_{(d5 - d100)} > 0,72.$$

La silice précipitée préparée par le procédé selon l'invention possède habituellement une surface spécifique CTAB ($S_{CTAB}$) comprise entre 60 et 400 m²/g, de préférence entre 80 et 300 m²/g, en particulier entre 100 et 250 m²/g. Elle peut être comprise entre 120 et 230 m²/g, notamment entre 130 et 210 m²/g, par exemple entre 140 et 200 m²/g.

Elle présente généralement une surface spécifique BET ($S_{BET}$) comprise entre 60 et 500 m²/g, de préférence entre 90 et 380 m²/g, en particulier entre 120 et 300 m²/g. Elle peut être comprise entre 140 et 270 m²/g, notamment entre 160 et 260 m²/g, par exemple entre 175 et 250 m²/g.

De préférence, la silice précipitée obtenue par le procédé selon l'invention présente une certaine microporosité, cependant pas trop importante ; ainsi, en général, sa surface spécifique CTAB ($S_{CTAB}$) et sa surface spécifique BET ($S_{BET}$) sont telles que le rapport $S_{SET}$ / $S_{CTAB}$ est compris entre 1,0 et 1,5, de préférence entre 1,1 et 1,4, en particulier entre 1,15 et 1,35.

Les silices précipitées préparées par le procédé selon l'invention présentent de préférence une aptitude satisfaisante à la dispersion (dispersibilité) dans les polymères.

Si leur diamètre médian ($D_{50M}$), après désagglomération aux ultra-sons, est en général d'au plus 9,0 μm, il est habituellement inférieur à 6,5 μm, de préférence inférieur à 6,0 μm, notamment inférieur à 5,0 μm ; il peut être en particulier inférieur à 4,0 μm, par exemple inférieur à 3,0 μm.

Leur nombre de silanols par nm², $N_{SiOH/nm2}$, est généralement compris entre 3,5 et 6, notamment entre 3,9 et 5,5.

Leur pH est habituellement compris entre 6,2 et 7,6, notamment entre 6,4 et 7,4.

Les silices précipitées préparées par le procédé selon l'invention se présentent en général sous au moins l'une des formes suivantes : billes sensiblement sphériques, poudre, granulés.

Elles peuvent ainsi se présenter sous forme de billes sensiblement sphériques, en particulier de taille moyenne d'au moins 80 $\mu$m.

Cette taille moyenne des billes peut être d'au moins 100 $\mu$m, par exemple d'au moins 150 $\mu$m ; elle est généralement d'au plus 300 $\mu$m et se situe de préférence entre 100 et 270 $\mu$m, notamment entre 200 et 260 $\mu$m. Cette taille moyenne est déterminée selon la norme NF X 11507 (décembre 1970) par tamisage à sec et détermination du diamètre correspondant à un refus cumulé de 50 %.

Elles peuvent également se présenter sous forme de poudre, généralement de taille moyenne d'au moins 3 $\mu$m, en particulier d'au moins 10 $\mu$m, par exemple d'au moins 15 $\mu$m ; celle-ci peut être comprise entre 15 et 60 $\mu$m (notamment entre 20 et 45 $\mu$m) ou entre 30 et 150 $\mu$m (notamment entre 45 et 120 $\mu$m).

Elles peuvent aussi se présenter sous forme de granulés (en général de forme sensiblement parallélépipédique), en particulier de taille d'au moins 1 mm, par exemple comprise entre 1 et 10 mm, notamment selon l'axe de leur plus grande dimension (longueur).

La silice précipitée préparée par le procédé selon l'invention peut être utilisée dans de nombreuses applications.

Elle est utilisable dans le renforcement des polymères, naturels ou synthétiques.

Généralement, elle présente une bonne aptitude à la dispersion dans les polymères et confère à ceux-ci un compromis de propriétés très satisfaisant, par exemple au niveau de leurs propriétés mécaniques, dynamiques, rhéologiques.

Les compositions de polymère(s) dans lesquelles elle peut être employée, notamment à titre de charge renforçante, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques.

Par exemple, on peut utiliser les polymères ou copolymères dérivant de monomères aliphatiques ou aromatiques, comprenant au moins une insaturation (tels que, notamment, l'éthylène, le propylène, le butadiène, l'isoprène, le styrène), le polyacrylate de butyle, ou leurs mélanges ; on peut également citer les élastomères silicones, les élastomères fonctionnalisés (par exemple par des fonctions susceptibles de réagir avec la surface de la silice) et les polymères halogénés. On peut mentionner les polyamides.

Le polymère (copolymère) peut être un polymère (copolymère) en masse, un latex de polymère (copolymère) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM). On peut également citer le caoutchouc naturel (NR).

Les compositions de polymère(s) peuvent être vulcanisées au soufre (on obtient alors des vulcanisats) ou réticulées notamment aux péroxydes.

En général, les compositions de polymère(s) comprennent en outre au moins un agent de couplage (silice/polymère) et/ou au moins un agent de recouvrement de la silice ; elles peuvent également comprendre, entre autres, un agent anti-oxydant.

On peut notamment utiliser comme agents de couplage, à titre d'exemples non limitatifs, des silanes polysulfurés, dits "symétriques" ou "asymétriques" ; on peut citer plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple le tétrasulfure de monoéthoxydiméthylsilylpropyle.

L'agent de couplage peut être préalablement greffé sur le polymère.

Il peut être également employé à l'état libre (c'est-à-dire non préalablement greffé) ou greffé à la surface de la silice. Il en est de même de l'éventuel agent de recouvrement.

A l'agent de couplage peut éventuellement être associé un "activateur de couplage" approprié, c'est-à-dire un composé qui, mélangé avec cet agent de couplage, augmente l'efficacité de ce dernier.

La proportion en poids de silice précipitée dans la composition de polymère(s) peut varier dans une gamme assez large. Elle représente habituellement 20 à 80 %, par exemple 30 à 70 %, de la quantité du (des) polymère (s).

La silice précipitée obtenue par le procédé selon l'invention peut avantageusement constituer la totalité de la charge inorganique renforçante, et même la totalité de la charge renforçante, de la composition de polymère(s).

Cependant, à cette silice précipitée obtenue par le procédé selon l'invention selon l'invention peut être éventuellement associée au moins une autre charge renforçante, comme en particulier une silice hautement dispersible commerciale telle que par exemple la Z1165MP, la Z1115MP, une silice précipitée traitée (par exemple "dopée" à l'aide d'un cation comme l'aluminium), une autre charge inorganique renforçante telle que par exemple l'alumine, voire même une charge organique renforçante, notamment du noir de carbone (éventuellement recouvert d'une couche inorganique, par exemple de silice). La silice précipitée obtenue par le procédé selon l'invention constitue alors de préférence au moins 50 %, voire au moins 80 %, en poids de la totalité de la charge renforçante.

On peut citer, à titre d'exemples, non limitatifs, d'articles finis à base des compositions de polymère(s) décrites précédemment (notamment à base des vulcanisats mentionnés ci-dessus) les semelles de chaussures (de préférence en présence d'un agent de couplage (silice/polymère), par exemple le tétrasulfure de monoéthoxydiméthylsilylpropyle), les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les gaines, les cables et les courroies de transmissions.

La silice précipitée préparée par le procédé selon l'invention peut être également employée notamment comme support de catalyseur, comme absorbant de matières actives (en particulier support de liquides, par exemple utilisés dans l'alimentation, tels que les vitamines (vitamine E), le chlorure de choline), comme agent viscosant, texturant ou anti-mottant, comme élément pour séparateurs de batteries, comme additif pour dentifrice, pour béton, pour papier.

Les exemples suivants illustrent l'invention sans toutefois en limiter la portée.

EXEMPLE 1

Dans un réacteur en acier inoxydable de 25 litres, muni d'un système d'agitation par hélices et d'un chauffage par double enveloppe, on introduit 10,8 litres d'eau. Ce milieu est agité et porté à 94 °C. L'ensemble de la réaction est réalisé à cette température et sous agitation (360 tr/min, agitation hélice). De l'acide sulfurique, de concentration égale à 80 g/L, est introduit dans le réacteur jusqu'à ce que le pH de ce pied de cuve atteigne une valeur de 3,7 (soit 24 grammes d'acide sulfurique en 1 minute environ).

On introduit ensuite simultanément dans ledit pied de cuve formé, pendant 35 minutes, une solution de silicate de sodium (de rapport pondéral $SiO_2/Na_2O$ égal à 3,49) ayant une concentration de 235 g/L, à un débit de 55 g/min, et de l'acide sulfurique de concentration égale à 80 g/L, à un débit régulé de manière à maintenir le pH du milieu réactionnel à une valeur de 3,9.

Au terme des 35 minutes d'addition simultanée, l'introduction d'acide est arrêtée et on continue d'introduire une solution de silicate de sodium (de rapport pondéral $SiO_2/Na_2O$ égal à 3,49) ayant une concentration de 235 g/L, à un débit de 55 g/min, jusqu'à ce que le pH du milieu réactionnel atteigne une valeur de 8 (soit 169 grammes de solution de silicate en 3 minutes environ).

Puis on introduit simultanément dans le milieu réactionnel, pendant 40 minutes, une solution de silicate de sodium (de rapport pondéral $SiO_2/Na_2O$ égal à 3,49) ayant une concentration de 235 g/L, à un débit de 55 g/min, et de l'acide sulfurique de concentration égale à 80 g/L, à un débit régulé de manière à maintenir le pH du milieu réactionnel à une valeur de 8.

Au terme des 40 minutes de cette deuxième addition simultanée, l'introduction de silicate est arrêtée et on continue d'introduire de l'acide sulfurique de concentration égale à 80 g/L, à un débit de 39 g/min, jusqu'à ce que le pH du milieu réactionnel atteigne une valeur de 4 (soit 207 grammes d'acide sulfurique en 5 minutes environ).

On introduit ensuite simultanément dans le milieu réactionnel, pendant 22 minutes, une solution de silicate de sodium (de rapport pondéral $SiO_2/Na_2O$ égal à 3,49) ayant une concentration de 235 g/L, à un débit de 20 g/min, et de l'acide sulfurique de concentration égale à 80 g/L, à un débit régulé de manière à maintenir le pH du milieu réactionnel à une valeur de 4.

Au terme des 22 minutes de cette troisième addition simultanée, on introduit une solution de silicate de sodium, du type décrit ci-avant, à un débit de 20 g/min, de manière à remonter le pH du milieu réactionnel à 5,2 (soit 41 grammes de solution de silicate en 2 minutes).

On obtient à l'issue de la réaction une bouillie réactionnelle de silice précipitée qui est maintenue sous agitation, à une température de 94 °C, pendant 5 minutes. Après ce mûrissement, la bouillie de silice précipitée est récupérée, par vidange du réacteur.

La bouillie est filtrée et lavée sous vide (extrait sec de 14 % en poids). Le gâteau de filtration obtenu est lavé 4 fois avec 5 litres d'eau. Il est ensuite remis en suspension par délitage mécanique en présence d'eau. La bouillie résultante (extrait sec de 10 % en poids) est séchée au moyen d'un atomiseur à turbines.

Les caractéristiques de la silice précipitée obtenue (sous forme de poudre) sont alors les suivantes :

Surface spécifique CTAB : 194 $m^2$/g

Taille médiane d50 d'agrégats : 75 nm

$V_{(d5 - d50)} / V_{(d5 - d100)}$ : 0,76

Mode (porosimétrie Hg) : 14,0 nm

$D_{50M}$ (après désagglomération aux ultra-sons) : 4,9 $\mu$m

On constate que la silice précipitée obtenue est formée d'agrégats de grosses particules primaires (gpp) de silice à la surface desquels se trouvent des petites particules primaires (ppp) de silice.

EXEMPLE 2

Dans un réacteur en acier inoxydable de 25 litres, muni d'un système d'agitation par hélices et d'un chauffage par double enveloppe, on introduit 9,4 litres d'eau. Ce milieu est agité et porté à 92 °C. L'ensemble de la réaction est réalisé à cette température et sous agitation (360 tr/min, agitation hélice). De l'acide sulfurique, de concentration égale à 80 g/L, est introduit dans le réacteur jusqu'à ce que le pH de ce pied de cuve atteigne une valeur de 4,2 (soit 28 grammes d'acide sulfurique en 3 minutes environ).

On introduit ensuite simultanément dans ledit pied de cuve formé, pendant 10 minutes, une solution de silicate de sodium (de rapport pondéral $SiO_2/Na_2O$ égal à 3,47) ayant une concentration de 235 g/L, à un débit de 46,8 g/min, et de l'acide sulfurique de concentration égale à 80 g/L, à un débit régulé de manière à maintenir le pH du milieu réactionnel à une valeur de 4,4.

Au terme des 10 minutes d'addition simultanée, l'introduction d'acide est arrêtée et on continue d'introduire une solution de silicate de sodium (de rapport pondéral $SiO_2/Na_2O$ égal à 3,47) ayant une concentration de 235 g/L, à un débit de 46,8 g/min, jusqu'à ce que le pH du milieu réactionnel atteigne une valeur de 8 (soit 55 grammes de solution de silicate en 1 minute environ).

Puis on introduit simultanément dans le milieu réactionnel, pendant 100 minutes, une solution de silicate de sodium (de rapport pondéral $SiO_2/Na_2O$ égal à 3,47) ayant une concentration de 235 g/L, à un débit de 46,8 g/min, et de l'acide sulfurique de concentration égale à 80 g/L, à un débit régulé de manière à maintenir le pH du milieu réactionnel à une valeur de 8.

Au terme des 100 minutes de cette deuxième addition simultanée, l'introduction de silicate est arrêtée et on continue d'introduire de l'acide sulfurique de concentration égale à 80 g/L, à un débit de 39 g/min, jusqu'à ce que le pH du milieu réactionnel atteigne une valeur de 4 (soit 194 grammes d'acide sulfurique en 5 minutes environ).

On introduit ensuite simultanément dans le milieu réactionnel, pendant 85 minutes, une solution de silicate de sodium (de rapport pondéral $SiO_2/Na_2O$ égal à 3,47) ayant une concentration de 235 g/L, à un débit de 20 g/min, et de l'acide sulfurique de concentration égale à 80 g/L, à un débit régulé de manière à maintenir le pH du milieu réactionnel à une valeur de 4.

Au terme des 85 minutes de cette troisième addition simultanée, on introduit une solution de silicate de sodium, du type décrit ci-avant, à un débit de 20 g/min, de manière à remonter le pH du milieu réactionnel à 5,2 (soit 97 grammes de solution de silicate en 5 minutes).

On obtient à l'issue de la réaction une bouillie réactionnelle de silice précipitée qui est maintenue sous agitation, à une température de 92 °C, pendant 5 minutes. Après ce mûrissement, la bouillie de silice précipitée est récupérée, par vidange du réacteur.

La bouillie est filtrée et lavée sous vide (extrait sec de 14 % en poids). Le gâteau de filtration obtenu est lavé 4 fois avec 5 litres d'eau. Il est ensuite remis en suspension par délitage mécanique en présence d'eau. La bouillie résultante (extrait sec de 10 % en poids) est séchée au moyen d'un atomiseur à turbines.

Les caractéristiques de la silice précipitée obtenue (sous forme de poudre) sont alors les suivantes :

Surface spécifique CTAB : 135 $m^2/g$
Taille médiane d50 d'agrégats : 142 nm
$V_{(d5-d50)}$ / $V_{(d5-d100)}$ : 0,80
Mode (porosimétrie Hg) : 22,0 nm
$D_{50M}$ (après désagglomération aux ultra-sons) : 6,3 $\mu$m

On constate que la silice précipitée obtenue est formée d'agrégats de grosses particules primaires (gpp) de silice à la surface desquels se trouvent des petites particules primaires (ppp) de silice.

EXEMPLE 3

Dans un réacteur en acier inoxydable de 25 litres, muni d'un système d'agitation par hélices et d'un chauffage par double enveloppe, on introduit 11,8 litres d'eau. Ce milieu est agité et porté à 86 °C. L'ensemble de la réaction est réalisé sous agitation (360 tr/min, agitation hélice). De l'acide sulfurique, de concentration égale à 80 g/L, est introduit dans le réacteur jusqu'à ce que le pH de ce pied de cuve atteigne une valeur de 3,8 (soit 34 grammes d'acide sulfurique en 2 minutes environ).

On introduit ensuite simultanément dans ledit pied de cuve formé, pendant 35 minutes, une solution de silicate de sodium (de rapport pondéral $SiO_2/Na_2O$ égal à 3,47) ayant une concentration de 235 g/L, à un débit de 59 g/min, et de l'acide sulfurique de concentration égale à 80 g/L, à un débit régulé de manière à maintenir le pH du milieu réactionnel à une valeur de 4,0.

Au terme des 35 minutes d'addition simultanée, l'introduction d'acide est arrêtée et on continue d'introduire une solution de silicate de sodium (de rapport pondéral $SiO_2/Na_2O$ égal à 3,47) ayant une concentration de 235 g/L, à un débit de 59 g/min, jusqu'à ce que le pH du milieu réactionnel atteigne une valeur de 8 (soit 221 grammes de solution de silicate en 4 minutes environ). Parallèlement à cette introduction de solution de silicate de sodium, le milieu réactionnel est porté à 92 °C. Le reste de la réaction est réalisé à cette température.

Puis on introduit simultanément dans le milieu réactionnel, pendant 40 minutes, une solution de silicate de sodium (de rapport pondéral $SiO_2/Na_2O$ égal à 3,47) ayant une concentration de 235 g/L, à un débit de 59 g/min, et de l'acide sulfurique de concentration égale à 80 g/L, à un débit régulé de manière à maintenir le pH du milieu réactionnel à une valeur de 8.

Au terme des 40 minutes de cette deuxième addition simultanée, l'introduction de silicate est arrêtée et on continue d'introduire de l'acide sulfurique de concentration égale à 80 g/L, à un débit de 39 g/min, jusqu'à ce que le pH du milieu réactionnel atteigne une valeur de 4 (soit 316 grammes d'acide sulfurique en 8 minutes environ).

On introduit ensuite simultanément dans le milieu réactionnel, pendant 81 minutes, une solution de silicate de sodium (de rapport pondéral $SiO_2/Na_2O$ égal à 3,47) ayant une concentration de 235 g/L, à un débit de 18,2 g/min, et de l'acide sulfurique de concentration égale à 80 g/L, à un débit régulé de manière à maintenir le pH du milieu réactionnel à une valeur de 4.

Au terme des 81 minutes de cette troisième addition simultanée, on introduit une solution de silicate de sodium, du type décrit ci-avant, à un débit de 15 g/min, de manière à remonter le pH du milieu réactionnel à 5,2 (soit 91 grammes de solution de silicate en 6 minutes).

On obtient à l'issue de la réaction une bouillie réactionnelle de silice précipitée qui est maintenue sous agitation, à une température de 92 °C, pendant 5 minutes. Après ce mûrissement, la bouillie de silice précipitée est récupérée, par vidange du réacteur.

La bouillie est filtrée et lavée sous vide (extrait sec de 14 % en poids). Le gâteau de filtration obtenu est lavé 4 fois avec 5 litres d'eau. Il est ensuite remis en suspension par délitage mécanique en présence d'eau. La bouillie résultante (extrait sec de 10 % en poids) est séchée au moyen d'un atomiseur à turbines.

Les caractéristiques de la silice précipitée obtenue (sous forme de poudre) sont alors les suivantes :

Surface spécifique CTAB : 225 $m^2/g$
Taille médiane d50 d'agrégats : 67 nm
$V_{(d5-d50)} / V_{(d5-d100)}$ : 0,76
Mode (porosimétrie Hg) : 11,6 nm
C (SAXS) : 0,450
$D_{50M}$ (après désagglomération aux ultra-sons) : 3,9 $\mu m$

On constate que la silice précipitée obtenue est formée d'agrégats de grosses particules primaires (gpp) de silice à la surface desquels se trouvent des petites particules primaires (ppp) de silice.

**Revendications**

1. Procédé de préparation de silice précipitée du type comprenant la réaction d'un silicate avec un agent acidifiant ce par quoi l'on obtient une suspension de silice, puis la séparation et le séchage de cette suspension, **caractérisé en ce que** la réaction du silicate avec l'agent acidifiant est réalisée de la manière suivante :

(i) on forme un pied de cuve aqueux présentant un pH compris entre 2 et 5, de préférence entre 2,5 et 5,
(ii) on ajoute audit pied de cuve, simultanément, du silicate et de l'agent acidifiant, de telle manière que le pH du milieu réactionnel soit maintenu entre 2 et 5, de préférence entre 2,5 et 5,
(iii) on arrête l'addition de l'agent acidifiant tout en continuant l'addition de silicate dans le milieu réactionnel jusqu'à l'obtention d'une valeur du pH du milieu réactionnel comprise entre 7 et 10, de préférence entre 7,5 et 9,5,
(iv) on ajoute au milieu réactionnel, simultanément, du silicate et de l'agent acidifiant, de telle manière que le pH du milieu réactionnel soit maintenu entre 7 et 10, de préférence entre 7,5 et 9,5,
(v) on arrête l'addition du silicate tout en continuant l'addition de l'agent acidifiant dans le milieu réactionnel jusqu'à l'obtention d'une valeur du pH du milieu réactionnel comprise entre 2,5 et 5,3, de préférence entre 2,8 et 4,9,
(vi) on met en contact le milieu réactionnel avec de l'agent acidifiant et du silicate, de telle manière que le pH du milieu réactionnel soit maintenu entre 2,5 et 5,3, de préférence entre 2,8 et 4,9,
(vii) on ajoute dans le milieu réactionnel obtenu un agent alcalin, de préférence du silicate, et ce de manière à augmenter le pH du milieu réactionnel jusqu'à une valeur comprise entre 4,7 et 6,3, de préférence entre 5,0 et 5,8, cette étape (vii) étant optionnelle dans le cas où dans l'étape (vi) on met en contact un milieu réactionnel, présentant un pH compris entre 5,0 et 5,3, avec de l'agent acidifiant et du silicate, de telle manière que le pH du milieu réactionnel soit maintenu entre 5,0 et 5,3.

2. Procédé selon la revendication 1 de préparation de silice précipitée du type comprenant la réaction d'un silicate avec un agent acidifiant ce par quoi l'on obtient une suspension de silice, puis la séparation et le séchage de cette suspension, **caractérisé en ce que** la réaction du silicate avec l'agent acidifiant est réalisée de la manière suivante :

> (i) on forme un pied de cuve aqueux présentant un pH compris entre 2 et 5, de préférence entre 2,5 et 5,
> (ii) on ajoute audit pied de cuve, simultanément, du silicate et de l'agent acidifiant, de telle manière que le pH du milieu réactionnel soit maintenu entre 2 et 5, de préférence entre 2,5 et 5,
> (iii) on arrête l'addition de l'agent acidifiant tout en continuant l'addition de silicate dans le milieu réactionnel jusqu'à l'obtention d'une valeur du pH du milieu réactionnel comprise entre 7 et 10, de préférence entre 7,5 et 9,5,
> (iv) on ajoute au milieu réactionnel, simultanément, du silicate et de l'agent acidifiant, de telle manière que le pH du milieu réactionnel soit maintenu entre 7 et 10, de préférence entre 7,5 et 9,5,
> (v) on arrête l'addition du silicate tout en continuant l'addition de l'agent acidifiant dans le milieu réactionnel jusqu'à l'obtention d'une valeur du pH du milieu réactionnel comprise entre 2,5 et 5,3, de préférence entre 2,8 et 4,9,
> (vi) on met en contact le milieu réactionnel avec de l'agent acidifiant et du silicate, de telle manière que le pH du milieu réactionnel soit maintenu entre 2,5 et 5,3, de préférence entre 2,8 et 4,9,
> (vii) on ajoute dans le milieu réactionnel obtenu un agent alcalin, de préférence du silicate, et ce de manière à augmenter le pH du milieu réactionnel jusqu'à une valeur comprise entre 4,7 et 6,3, de préférence entre 5,0 et 5,8.

3. Procédé selon l'une des revendications 1 et 2, **caractérisé en ce que** l'étape (i) comprend l'ajout d'agent acidifiant à de l'eau de manière à obtenir une valeur de pH du pied de cuve ainsi formé comprise entre 2 et 5, de préférence entre 2,5 et 5, notamment entre 3,0 et 4,5.

4. Procédé selon l'une des revendications 1 à 3, **caractérisé en ce que** l'ensemble des étapes est réalisé entre 75 et 97 °C, de préférence entre 80 et 96 °C.

5. Procédé selon l'une des revendications 1 à 4, **caractérisé en ce que**, dans l'étape (vi), on ajoute audit milieu réactionnel d'abord l'agent acidifiant, puis le silicate.

6. Procédé selon l'une des revendications 1 à 4, **caractérisé en ce que**, dans l'étape (vi), on ajoute simultanément l'agent acidifiant et le silicate audit milieu réctionnel, de préférence le pH du milieu réactionnel résultant restant sensiblement constant.

7. Procédé selon l'une des revendications 1 à 6, **caractérisé en ce que** l'on procède à une étape de mûrissement à l'issue de l'étape (vii).

8. Procédé selon l'une des revendications 1 à 7, **caractérisé en ce que** l'étape (vi) est réalisée dans un mélangeur rapide ou dans une zone d'écoulement turbulent.

9. Procédé selon la revendication 5, **caractérisé en ce que**, dans l'étape (vi), le silicate et le milieu résultant de l'ajout de l'agent acidifiant au milieu réactionnel sont mis en contact dans un mélangeur rapide ou dans une zone d'écoulement turbulent.

10. Procédé selon la revendication 6, **caractérisé en ce que**, dans l'étape (vi), l'agent acidifiant et le silicate sont mis en contact avec le milieu réactionnel dans un mélangeur rapide ou dans une zone d'écoulement turbulent.

11. Procédé selon l'une des revendications 8 à 10, **caractérisé en ce que** le milieu réactionnel obtenu, dans l'étape (vi), dans le mélangeur rapide ou dans la zone d'écoulement turbulent est introduit dans un réacteur, dans lequel l'étape (vii) est mise en oeuvre.

12. Procédé selon l'une des revendications 8 à 11, **caractérisé en ce que**, dans l'étape (vi), on met en oeuvre un mélangeur rapide choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

13. Procédé selon l'une des revendications 8 à 12, **caractérisé en ce que**, dans l'étape (vi), on met en oeuvre un mélangeur à jets tangentiels, Hartridge-Roughton ou vortex.

14. Procédé selon l'une des revendications 1 à 13, **caractérisé en ce que** le séchage est effectué par atomisation.

15. Procédé selon l'une des revendications 1 à 14, **caractérisé en ce que** la séparation comprend une filtration effectuée au moyen d'un filtre presse ou au moyen d'un filtre sous-vide.

16. Procédé de préparation selon l'une des revendications 1 à 15 d'une silice précipitée, **caractérisé en ce que** ladite silice est formée d'agrégats de particules primaires (A) de silice à la surface desquels se trouvent des particules primaires (B) de silice de taille inférieure à celle des particules primaires (A) et **en ce qu'**elle possède :

- une surface spécifique CTAB ($S_{CTAB}$) comprise entre 60 et 400 $m^2$/g,
- une taille médiane d50 d'agrégats, mesurée par granulométrie XDC après désagglomération aux ultra-sons, telle que :

$$d50 \ (nm) > (6214 / S_{CTAB} \ (m^2/g)) + 23,$$

- une répartition du volume poreux telle que :

$$V_{(d5 - d50)} / V_{(d5 - d100)} > 0,906 - (0,0013 \ x \ S_{CTAB} \ (m^2/g)),$$

et
- une distribution de tailles de pores telle que :

$$Mode \ (nm) > (4166 / S_{CTAB} \ (m^2/g)) - 9,2.$$

17. Procédé de préparation selon la revendication 16, caractérisé en que ladite silice précipitée présente un paramètre C, mesuré par diffusion de rayons X aux petits angles (SAXS), tel que : C / / $S_{CTAB}$ ($m^2$/g) > 0,001.

18. Procédé de préparation selon l'une des revendications 16 et 17, **caractérisé en ce que** ladite silice précipitée se présente sous au moins l'une des formes suivantes : billes sensiblement sphériques, en particulier de taille moyenne d'au moins 80 $\mu$m, poudre, en particulier de taille moyenne d'au moins 3 $\mu$m, par exemple d'au moins 10 $\mu$m, granulés, en particulier de taille d'au moins 1 mm.


**Patentansprüche**

1. Verfahren zur Herstellung von Fällungskieselsäure, umfassend die Reaktion eines Silikats mit einem Säuerungsmittel, wodurch eine Kieselsäuresuspension erhalten wird, dann die Trennung und die Trocknung dieser Suspension, **dadurch gekennzeichnet, dass** die Reaktion des Silikats mit dem Säuerungsmittel auf folgende Weise durchgeführt wird:

(i) Bildung einer wässerigen Füllung, die einen pH-Wert zwischen 2 und 5, vorzugsweise zwischen 2,5 und 5, aufweist,
(ii) Hinzufügen gleichzeitig von Silikat und Säuerungsmittel zu der Füllung, so dass der pH-Wert des Reaktionsmediums zwischen 2 und 5, vorzugsweise zwischen 2,5 und 5, gehalten wird,
(iii) Einstellen der Hinzufügung des Säuerungsmittels, wobei die Hinzufügung von Silikat in das Reaktionsmedium fortgesetzt wird, bis ein pH-Wert des Reaktionsmediums zwischen 7 und 10, vorzugsweise zwischen 7,5 und 9,5, erhalten wird,
(iv) Hinzufügen gleichzeitig von Silikat und Säuerungsmittel zu dem Reaktionsmedium, so dass der pH-Wert des Reaktionsmediums zwischen 7 und 10, vorzugsweise zwischen 7,5 und 9,5, gehalten wird,

(v) Einstellen der Hinzufügung des Silikats, wobei die Hinzufügung des Säuerungsmittels in das Reaktionsmedium fortgesetzt wird, bis ein pH-Wert des Reaktionsmediums zwischen 2,5 und 5,3, vorzugsweise zwischen 2,8 und 4,9, erhalten wird,

(vi) In Kontakt bringen des Reaktionsmediums mit Säuerungsmittel und Silikat, so dass der pH-Wert des Reaktionsmediums zwischen 2,5 und 5,3, vorzugsweise zwischen 2,8 und 4,9, gehalten wird,

(vii) Hinzufügen eines alkalischen Wirkstoffes, vorzugsweise eines Silikats, zu dem erhaltenen Reaktionsmedium, um auf diese Weise den pH-Wert des Reaktionsmediums auf einen Wert zwischen 4,7 und 6,3, vorzugsweise zwischen 5,0 und 5,8, zu erhöhen, wobei dieser Schritt (vii) optional ist, falls in Schritt (vi) ein Reaktionsmedium, das einen pH-Wert zwischen 5,0 und 5,3 aufweist, mit Säuerungsmittel und Silikat in Kontakt gebracht wird, so dass der pH-Wert des Reaktionsmediums zwischen 5,0 und 5,3 gehalten wird.

2. Verfahren nach Anspruch 1 zur Herstellung von Fällungskieselsäure, umfassend die Reaktion eines Silikats mit einem Säuerungsmittel, wodurch eine Kieselsäuresuspension erhalten wird, dann die Trennung und die Trocknung dieser Suspension, **dadurch gekennzeichnet, dass** die Reaktion des Silikats mit dem Säuerungsmittel auf folgende Weise durchgeführt wird:

(i) Bildung einer wässerigen Füllung, die einen pH-Wert zwischen 2 und 5, vorzugsweise zwischen 2,5 und 5, aufweist,

(ii) Hinzufügen gleichzeitig von Silikat und Säuerungsmittel zu der Füllung, so dass der pH-Wert des Reaktionsmediums zwischen 2 und 5, vorzugsweise zwischen 2,5 und 5, gehalten wird,

(iii) Einstellen der Hinzufügung des Säuerungsmittels, wobei die Hinzufügung von Silikat in das Reaktionsmedium fortgesetzt wird, bis ein pH-Wert des Reaktionsmediums zwischen 7 und 10, vorzugsweise zwischen 7,5 und 9,5, erhalten wird,

(iv) Hinzufügen gleichzeitig von Silikat und Säuerungsmittel zu dem Reaktionsmedium, so dass der pH-Wert des Reaktionsmediums zwischen 7 und 10, vorzugsweise zwischen 7,5 und 9,5, gehalten wird,

(v) Einstellen der Hinzufügung des Silikats, wobei die Hinzufügung des Säuerungsmittels in das Reaktionsmedium fortgesetzt wird, bis ein pH-Wert des Reaktionsmediums zwischen 2,5 und 5,3, vorzugsweise zwischen 2,8 und 4,9, erhalten wird,

(vi) In Kontakt bringen des Reaktionsmediums mit Säuerungsmittel und Silikat, so dass der pH-Wert des Reaktionsmediums zwischen 2,5 und 5,3, vorzugsweise zwischen 2,8 und 4,9, gehalten wird,

(vii) Hinzufügen eines alkalischen Wirkstoffes, vorzugsweise eines Silikats, zu dem erhaltenen Reaktionsmedium, um auf diese Weise den pH-Wert des Reaktionsmediums auf einen Wert zwischen 4,7 und 6,3, vorzugsweise zwischen 5,0 und 5,8, zu erhöhen.

3. Verfahren nach einem der Ansprüche 1 und 2, **dadurch gekennzeichnet, dass** der Schritt (i) die Hinzufügung eines Säuerungsmittels zu Wasser umfasst, um einen pH-Wert der so gebildeten Füllung zwischen 2 und 5, vorzugsweise zwischen 2,5 und 5, insbesondere zwischen 3,0 und 4,5, zu erhalten.

4. Verfahren nach einem der Ansprüche 1 bis 3, **dadurch gekennzeichnet, dass** die Gesamtheit der Schritte zwischen 75 und 97°C, vorzugsweise zwischen 80 und 96°C, erfolgt.

5. Verfahren nach einem der Ansprüche 1 bis 4, **dadurch gekennzeichnet, dass** in Schritt (vi) zu dem Reaktionsmedium zuerst das Säuerungsmittel, dann das Silikat hinzugefügt wird.

6. Verfahren nach einem der Ansprüche 1 bis 4, **dadurch gekennzeichnet, dass** in Schritt (vi) gleichzeitig das Säuerungsmittel und das Silikat zu dem Reaktionsmedium hinzugefügt werden, wobei vorzugsweise der pH-Wert des sich ergebenden Reaktionsmediums im Wesentlichen konstant bleibt.

7. Verfahren nach einem der Ansprüche 1 bis 6, **dadurch gekennzeichnet, dass** ein Schritt der Reifung nach Schritt (vii) vorgenommen wird.

8. Verfahren nach einem der Ansprüche 1 bis 7, **dadurch gekennzeichnet, dass** der Schritt (vi) in einem Schnellmischer oder in einer Zone mit turbulenter Strömung durchgeführt wird.

9. Verfahren nach Anspruch 5, **dadurch gekennzeichnet, dass** in Schritt (vi) das Silikat und das Medium, das sich aus der Hinzufügung des Säuerungsmittels zum Reaktionsmedium ergibt, in einem Schnellmischer oder in einer Zone mit turbulenter Strömung in Kontakt gebracht werden.

**10.** Verfahren nach Anspruch 6, **dadurch gekennzeichnet, dass** in Schritt (vi) das Säuerungsmittel und das Silikat mit dem Reaktionsmedium in einem Schnellmischer oder in einer Zone mit turbulenter Strömung in Kontakt gebracht werden.

**11.** Verfahren nach einem der Ansprüche 8 bis 10, **dadurch gekennzeichnet, dass** das in Schritt (vi) in dem Schnellmischer oder in der Zone mit turbulenter Strömung erhaltene Reaktionsmedium in einen Reaktor eingeführt wird, in dem der Schritt (vii) eingesetzt wird.

**12.** Verfahren nach einem der Ansprüche 8 bis 11, **dadurch gekennzeichnet, dass** in Schritt (vi) ein Schnellmischer eingesetzt wird, der unter den symmetrischen T- oder Y-förmigen Mischern (oder Rohren), den asymmetrischen T- oder Y-förmigen Mischern (oder Rohren), den Mischern mit Tangentialgebläse, den Hartridge-Roughton-Mischern, den Vortex-Mischern, den Rotor-Stator-Mischern ausgewählt ist.

**13.** Verfahren nach einem der Ansprüche 8 bis 12, **dadurch gekennzeichnet, dass** in Schritt (vi) ein Mischer mit Tangentialgebläse, ein Hartridge-Roughton-Mischer oder ein Vortex-Mischer eingesetzt wird.

**14.** Verfahren nach einem der Ansprüche 1 bis 13, **dadurch gekennzeichnet, dass** die Trocknung durch Sprühtrocknen erfolgt.

**15.** Verfahren nach einem der Ansprüche 1 bis 14, **dadurch gekennzeichnet, dass** die Trennung eine Filterung umfasst, die mit Hilfe einer Filterpresse oder mit Hilfe eines Vakuumfilters durchgeführt wird.

**16.** Verfahren nach einem der Ansprüche 1 bis 15 zur Herstellung einer Fällungskieselsäure, **dadurch gekennzeichnet, dass** die Kieselsäure von Aggregaten von primären Kieselsäurepartikeln (A) gebildet ist, an deren Oberfläche sich primäre Kieselsäurepartikel (B) mit einer kleineren Größe als jene der primären Partikel (A) befinden, und dass sie besitzt:

- eine spezifische Fläche CTAB ($S_{CTAB}$) zwischen 60 und 400 m$^2$/g,
- eine mittlere Aggregatgröße d50, gemessen durch Granulometrie XDC nach Desagglomeration mit Ultraschall, so dass:

$$d50(nm) > (6214/S_{CTAB})(m^2/g))+23,$$

- eine Verteilung des porösen Volumens, so dass:

$$V_{(d5-d50)}/V_{(d5-d100)} > 0,906 - (0,0013 \times S_{CTAB}(m^2/g)), \text{ und}$$

- eine Porengrößenverteilung, so dass:

$$Modus (nm) > (4166 / S_{CTAB}(m^2/g))-9,2.$$

**17.** Herstellungsverfahren nach Anspruch 16, **dadurch gekennzeichnet, dass** die Fällungskieselsäure einen Parameter C aufweist, gemessen durch Röntgenkleinwinkelstreuung (SAXS), so dass:

$$C/S_{CTAB}(m^2/g) > 0,001.$$

**18.** Herstellungsverfahren nach einem der Ansprüche 16 und 17, **dadurch gekennzeichnet, dass** die Fällungskieselsäure mindestens in einer der folgenden Formen vorhanden ist: im Wesentlichen sphärische Kugeln, insbesondere mit einer durchschnittlichen Größe von mindestens 80 $\mu$m, Pulver, insbesondere mit einer durchschnittlichen Größe von mindestens 3 $\mu$m, beispielsweise mindestens 10 $\mu$m, Granulat, insbesondere mit einer Größe von mindestens 1 mm.

**EP 2 473 443 B1**

**Claims**

1.  Process for preparing precipitated silica, of the type comprising the reaction of a silicate with an acidifying agent, via which a silica suspension is obtained, followed by the separation and drying of this suspension, **characterized in that** the reaction of the silicate with the acidifying agent is performed in the following manner:

    (i) an aqueous feedstock with a pH of between 2 and 5, preferably between 2.5 and 5 is formed,
    (ii) silicate and acidifying agent are added simultaneously to said feedstock, such that the pH of the reaction medium is maintained between 2 and 5, preferably between 2.5 and 5,
    (iii) the addition of the acidifying agent is stopped while continuing the addition of silicate to the reaction medium until a pH value obtained in the reaction medium is between 7 and 10, preferably between 7.5 and 9.5,
    (iv) silicate and acidifying agent are simultaneously added to the reaction medium, such that the pH of the reaction medium is maintained between 7 and 10, preferably between 7.5 and 9.5,
    (v) the addition of the silicate is stopped while continuing the addition of the acidifying agent to the reaction medium until a pH value obtained in the reaction medium is between 2.5 and 5.3, preferably between 2.8 and 4.9,
    (vi) the reaction medium is placed in contact with the acidifying agent and the silicate, such that the pH of the reaction medium is maintained between 2.5 and 5.3, preferably between 2.8 and 4.9,
    (vii) an alkaline agent, preferably silicate, is added to the reaction medium obtained, so as to increase the pH of the reaction medium to a value of between 4.7 and 6.3, preferably between 5.0 and 5.8, this step (vii) being optional in the case where, in step (vi), a reaction medium with a pH of between 5.0 and 5.3 is placed in contact with the acidifying agent and the silicate, such that the pH of the reaction medium is maintained between 5.0 and 5.3.

2.  Process according to Claim 1 for preparing precipitated silica of the type comprising the reaction of a silicate with an acidifying agent, via which a silica suspension is obtained, followed by the separation and drying of this suspension, **characterized in that** the reaction of the silicate with the acidifying agent is performed in the following manner:

    (i) an aqueous feedstock with a pH of between 2 and 5 and preferably between 2.5 and 5 is formed,
    (ii) silicate and acidifying agent are added simultaneously to said feedstock, such that the pH of the reaction medium is maintained between 2 and 5, preferably between 2.5 and 5,
    (iii) the addition of the acidifying agent is stopped while continuing the addition of silicate to the reaction medium until a pH value obtained in the reaction medium is between 7 and 10, preferably between 7.5 and 9.5,
    (iv) silicate and acidifying agent are added simultaneously to the reaction medium, such that the pH of the reaction medium is maintained between 7 and 10, preferably between 7.5 and 9.5,
    (v) the addition of the silicate is stopped while continuing the addition of the acidifying agent to the reaction medium until a pH value obtained in the reaction medium is between 2.5 and 5.3, preferably between 2.8 and 4.9,
    (vi) the reaction medium is placed in contact with the acidifying agent and the silicate, such that the pH of the reaction medium is maintained between 2.5 and 5.3, preferably between 2.8 and 4.9,
    (vii) an alkaline agent, preferably silicate, is added to the reaction medium obtained, so as to increase the pH of the reaction medium to a value of between 4.7 and 6.3, preferably between 5.0 and 5.8.

3.  Process according to either of Claims 1 and 2, **characterized in that** step (i) comprises the addition of acidifying agent to water so as to obtain a pH value of the feedstock thus formed of between 2 and 5, preferably between 2.5 and 5, especially between 3.0 and 4.5.

4.  Process according to one of Claims 1 to 3, **characterized in that** all the steps are performed between 75 and 97°C, preferably between 80 and 96°C.

5.  Process according to one of Claims 1 to 4, **characterized in that**, in step (vi), the acidifying agent is first added to said reaction medium, followed by the silicate.

6.  Process according to one of Claims 1 to 4, **characterized in that**, in step (vi), the acidifying agent and the silicate are added simultaneously to said reaction medium, and preferably the pH of the resulting reaction medium remains substantially constant.

7.  Process according to one of Claims 1 to 6, **characterized in that** a maturation step is performed after step (vii).

8.  Process according to one of Claims 1 to 7, **characterized in that** step (vi) is performed in a rapid mixer or in a turbulent flow zone.

9. Process according to Claim 5, **characterized in that**, in step (vi), the silicate and the medium resulting from the addition of the acidifying agent to the reaction medium are placed in contact in a rapid mixer or in a turbulent flow zone.

10. Process according to Claim 6, **characterized in that**, in step (vi), the acidifying agent and the silicate are placed in contact with the reaction medium in a rapid mixer or in a turbulent flow zone.

11. Process according to one of Claims 8 to 10, **characterized in that** the reaction medium obtained, in step (vi), in the rapid mixer or in the turbulent flow zone is introduced into the reactor in which step (vii) is performed.

12. Process according to one of Claims 8 to 11, **characterized in that**, in step (vi), a rapid mixer chosen from symmetrical T or Y mixers (or tubes), asymmetric T or Y mixers (or tubes), tangential-jet mixers, Hartridge-Roughton mixers, vortex mixers and rotor-stator mixers is used.

13. Process according to one of Claims 8 to 12, **characterized in that**, in step (vi), a tangential-jet, Hartridge-Roughton or vortex mixer is used.

14. Process according to one of Claims 1 to 13, **characterized in that** the drying is performed by atomization.

15. Process according to one of Claims 1 to 14, **characterized in that** the separation comprises filtration performed using a filter press or using a vacuum filter.

16. Process according to one of Claims 1 to 15 for preparing a precipitated silica, **characterized in that** said silica is formed from aggregates of primary particles (A) of silica at the surface of which are primary particles (B) of silica smaller in size than the primary particles (A), and **in that** it has:

- a CTAB specific surface area ($S_{CTAB}$) of between 60 and 400 m$^2$/g,
- a median size d50 of aggregates, measured by XDC granulometry after ultrasound deaggregation, such that:

$$d50(nm) > (6214/S_{CTAB} (m^2/g)) + 23,$$

- a pore volume distribution such that:

$$V_{(d5 - d50)}/V_{(d5 - d100)} > 0.906 - (0.0013 \times S_{CTAB}(m^2/g)),$$
$$and$$

- a pore size distribution such that:

$$Mode (nm) > (4166/S_{CTAB} (m^2/g)) - 9.2.$$

17. Preparation process according to Claim 16, **characterized in that** said precipitated silica has a parameter C, measured by small-angle X-ray scattering (SAXS), such that:

$$C/S_{CTAB} (m^2/g) > 0.001.$$

18. Preparation process according to either of Claims 16 and 17, **characterized in that** said precipitated silica is in at least one of the following forms: substantially spherical beads, in particular with a mean size of at least 80 $\mu$m, powder, in particular with a mean size of at least 3 $\mu$m, for example of at least 10 $\mu$m, granules, in particular with a size of at least 1 mm.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BRUNAUER ; EMMET ; TELLER.** *The journal of the American Chemical Society,* Février 1938, vol. 60, 309
- **GUINIER A. ; FOURNET G.** Small Angle Scattering of X rays. Wiley, 1955
- **GLATTER O. ; KRATTKY O.** Small Angle X Ray Scattering. Academic Press, 1982
- **SPALLA O. ; LYONNARD S. ; TESTARD F.** Analysis of the Small-Angle Intensity Scattered by a Porous and Granular Medium. *J. Appl. Cryst.,* 2003, vol. 36, 338-347